# EUROPEAN PATENT APPLICATION

(11) **EP 4 657 612 A2**
(43) Date of publication of application: **03.12.2025**
(21) Application number: 25199311.9
(22) Date of filing: 11.01.2022
(51) Int. Cl.: H01M 10/6556

(54) **BATTERY PACK AND VEHICLE COMPRISING SAME**

(30) Priority: 11.01.2021 KR 20210003548
(62) Divisional of application: 22736945.1
(71) Applicant: LG Energy Solution, Ltd., Seoul 07335 (KR)
(72) Inventor: YANG, Jin-Oh, 34122 Daejeon (KR); OH, Kwang-Keun, 34122 Daejeon (KR); JUNG, In-Hyuk, 34122 Daejeon (KR); CHOI, Hae-Won, 34122 Daejeon (KR)
(74) Representative: Goddar, Heinz J.

(57) **Abstract**

A battery pack according to an embodiment of the present disclosure includes a battery cell assembly including a plurality of battery cells; a busbar assembly provided on the battery cell assembly; a heat sink which is spaced a predetermined distance apart from the busbar assembly and supports a bottom of plurality of battery cells; and a thermally conductive member filled in a space between the plurality of battery cells on the heat sink.

## Description

### TECHNICAL FIELD

The present disclosure relates to a battery pack and a vehicle comprising the same.

The present application claims the benefit of Korean Patent Application No. 10-2021-0003548 filed on January 11, 2021 with the Korean Intellectual Property Office, the disclosure of which is incorporated herein by reference in its entirety.

### BACKGROUND ART

Due to their characteristics of being easily applicable to various products and electrical properties such as a high energy density, secondary batteries are not only commonly applied to portable devices, but universally applied to electric vehicles (EVs) or hybrid electric vehicle (HEVs) that are driven by an electrical driving source. Such secondary batteries are gaining attention for their primary advantage of remarkably reducing the use of fossil fuels and not generating by-products from the use of energy, making it a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. This unit secondary battery cell, i.e., a unit battery cell has an operating voltage of about 2.5V to 4.5V. Accordingly, when a higher output voltage is required, a plurality of battery cells may be connected in series to fabricate a battery pack. Additionally, the battery pack may be fabricated by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, when fabricating the battery pack by connecting the plurality of battery cells in series/in parallel, it is general to make a battery module including at least one battery cell, and then fabricate a battery pack or a battery rack using at least one battery module with an addition of any other component.

In general, the conventional battery pack case includes a plurality of battery cells, a heat sink to cool the plurality of battery cells and a cell frame for accommodating the plurality of battery cells and the heat sink. In general, the conventional cell frame includes an assembly of a plurality of plates including a front plate, a rear plate, a side plate, a lower plate and an upper plate to accommodate the plurality of battery cells and ensure the strength.

However, due to the characteristics of the cell frame structure including an assembly of a plurality of plates, the conventional battery pack has the increased fabrication cost and the complex assembly process, and thus there are price competitiveness and fabrication efficiency disadvantages.

Furthermore, due to the cell frame structure including an assembly of a plurality of plates, the conventional battery pack has an increase in its total size and thus there is an energy density disadvantage.

### DISCLOSURE

### Technical Problem

Accordingly, the present disclosure is directed to providing a battery pack with increased energy density and strength and a vehicle comprising the same.

Additionally, the present disclosure is further directed to providing a battery pack with improved price competitiveness and fabrication efficiency and a vehicle comprising the same.

Furthermore, the present disclosure is further directed to providing a battery pack with improved cooling performance and a vehicle comprising the same.

### Technical Solution

To solve the above-described problem, the present disclosure provides a battery pack including a battery cell assembly including a plurality of battery cells; a busbar assembly which is provided on the battery cell assembly and electrically connected to the plurality of battery cells; a heat sink which is spaced a predetermined distance apart from the busbar assembly and supports a bottom of plurality of battery cells; and a thermally conductive member filled in a space between the plurality of battery cells on the heat sink.

The thermally conductive member may be filled in the busbar assembly to cover the busbar assembly at least in part.

The thermally conductive member may be continuously filled between the busbar assembly and the battery cells in an up/down direction of the battery cell assembly.

The thermally conductive member may include a potting resin.

The potting resin may include a silicone resin.

The heat sink may include a sink body which supports the bottom of the plurality of battery cells, and has a cooling channel in which a cooling water flows; a cooling water inlet port which communicates with the cooling channel of the sink body and is provided in the sink body; and a cooling water outlet port which is provided in the sink body, spaced a predetermined distance apart from the cooling water inlet port.

The busbar assembly may include a pair of main busbars which is electrically connected to the battery cell assembly, and has a connector connected to an external charge/discharge line; and a plurality of connecting busbars which is electrically connected to the pair of main busbars, and connected to positive and negative electrodes of the plurality of battery cells.

The pair of main busbars may be electrically connected to the battery cells positioned on two outermost sides among the battery cells of the battery cell assembly.

The plurality of connecting busbars may be spaced a predetermined distance apart from each other along a lengthwise direction of the battery cell assembly.

The plurality of connecting busbars may include a busbar layer which is formed over a predetermined length along a widthwise direction of the battery cell assembly, and electrically connected to positive and negative electrodes of the battery cells; and a support layer which is provided below the busbar layer to support the busbar layer.

The busbar layer may include a layer body which is formed over a predetermined length along the widthwise direction of the battery cell assembly; and a plurality of electrode connection portions which protrudes from the layer body and is connected to the positive and negative electrodes of the battery cells.

The support layer may be provided below the layer body, and may have a shape corresponding to the layer body.

The support layer may be made of an insulating material.

The support layer may include a polyimide film.

Additionally, the present disclosure provides a vehicle including at least one battery pack according to the above-described embodiments.

### Advantageous Effects

According to the various embodiments as described above, it is possible to provide a battery pack with increased energy density and strength and a vehicle comprising the same.

Additionally, according to the various embodiments as described above, it is possible to provide a battery pack with improved price competitiveness and fabrication efficiency and a vehicle comprising the same.

Furthermore, according to the various embodiments as described above, it is possible to provide a battery pack with improved cooling performance and a vehicle comprising the same.

### DESCRIPTION OF DRAWINGS

The accompanying drawings illustrate a preferred embodiment of the present disclosure, and together with the detailed description of the present disclosure described below, serve to provide a further understanding of the technical aspects of the present disclosure, and thus the present disclosure should not be construed as being limited to the drawings.
FIG. 1 is a diagram illustrating a battery pack according to an embodiment of the present disclosure.
FIG. 2 is an exploded perspective view of the battery pack of FIG. 1.
FIG. 3 is a diagram illustrating a battery cell of a battery cell assembly of the battery pack of FIG. 2.
FIG. 4 is a diagram illustrating a battery cell according to another embodiment of the battery cell assembly of FIG. 3.
FIG. 5 is an exploded perspective view of a busbar assembly of the battery pack of FIG. 2.
FIG. 6 is a perspective view of a connecting busbar of the busbar assembly of FIG. 5.
FIG. 7 is an exploded perspective view of the connecting busbar of FIG. 6.
FIG. 8 is a perspective view of a connecting busbar according to another embodiment of the busbar assembly of FIG. 5.
FIG. 9 is a diagram illustrating the main parts of the connecting busbar of FIG. 8.
FIG. 10 is a perspective view of a heat sink of the battery pack of FIG. 2.
FIG. 11 is a perspective view of a bottom frame of the battery pack of FIG. 2.
FIGS. 12 and 13 are diagrams illustrating a bottom frame according to another embodiment of the battery pack of FIG. 2.
FIGS. 14 and 15 are diagrams illustrating pack case formation through a thermally conductive member of the battery pack of FIG. 1.
FIG. 16 is a diagram illustrating a vehicle according to an embodiment of the present disclosure.

### BEST MODE

The present disclosure will become apparent by describing a preferred embodiment of the present disclosure in detail with reference to the accompanying drawings. The embodiment described herein is provided by way of illustration to help an understanding of the present disclosure, and it should be understood that various modifications may be made to the present disclosure in other embodiments than the embodiment described herein. Additionally, to help an understanding of the present disclosure, the accompanying drawings are not shown in true scale and may depict some exaggerated elements.

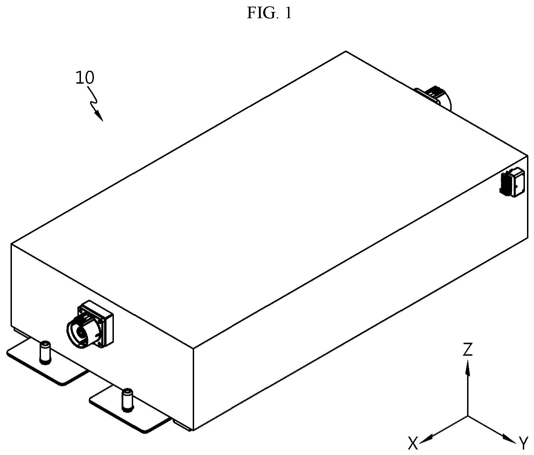

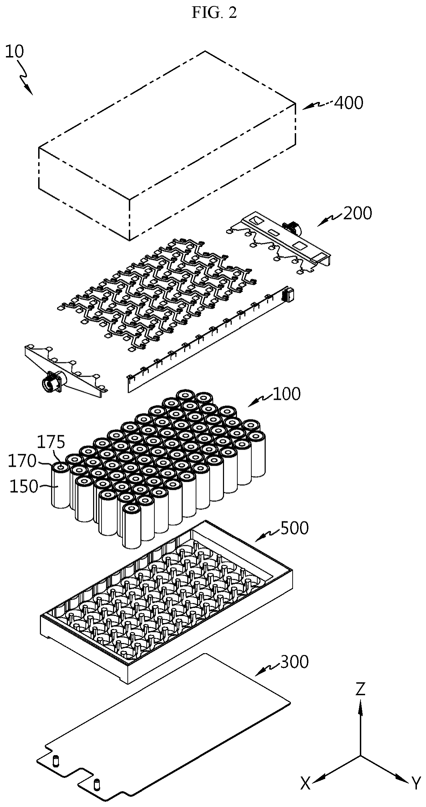

FIG. 1 is a diagram illustrating a battery pack according to an embodiment of the present disclosure, and FIG. 2 is an exploded perspective view of the battery pack of FIG. 1.

Referring to FIGS. 1 and 2, the battery pack 10 may be provided in an electric vehicle or a hybrid electric vehicle as an energy source. Hereinafter, the battery pack 10 provided in the electric vehicle will be described in more detail in the following relevant drawings.

The battery pack 10 may include a battery cell assembly 100, a busbar assembly 200, a heat sink 300 and a thermally conductive member 400.

The battery cell assembly 100 may include at least one battery cell 150. Hereinafter, this embodiment will be described based on the battery cell assembly 100 including the plurality of battery cells 150.

The plurality of battery cells 150 may include secondary batteries, for example, cylindrical secondary batteries, pouch type secondary batteries or prismatic secondary batteries. Hereinafter, this embodiment will be described based on cylindrical secondary batteries as the plurality of battery cells 150.

The plurality of battery cells 150 may be stacked such that they are electrically connected to each other. The plurality of battery cells 150 may have both a positive electrode 175 and a negative electrode 170 on top. Specifically, the positive electrode 175 of the battery cell 150 may be provided at the center of the top of the battery cell 150, and the negative electrode 170 of the battery cell 150 may be provided at the edge of the top of the battery cell 150.

In this embodiment, as described above, since both the positive electrode 175 and the negative electrode 170 of the plurality of battery cells 150 are provided on one side (+Z axis direction) of the battery cells 150, to be specific, the upper side (+Z axis direction) of the battery cells 150, it may be easier to establish an electrical connection to the busbar assembly 200 as described below.

Accordingly, in this embodiment, due to the structure in which the positive electrode 175 and the negative electrode 170 of the plurality of battery cells 150 are positioned in the same direction (+Z axis direction), it is possible to simplify the structure of connection to the busbar assembly 200 as described below and reduce the volume occupied by the electrical connection structure, compared to a structure in which the positive electrode and the negative electrode are positioned in either direction.

Accordingly, in this embodiment, it is possible to simplify the electrical connection structure between the battery cells 150 and the busbar assembly 200 as described below, thereby achieving the compact structure and improved energy density of the battery pack 10.

Hereinafter, each of the plurality of battery cells 150 will be described in more detail.

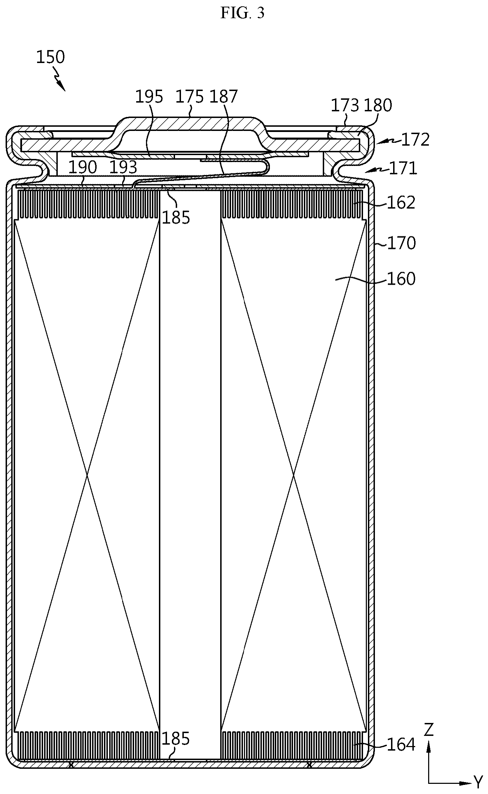

FIG. 3 is a diagram illustrating the battery cell of the battery cell assembly of the battery pack of FIG. 2.

Referring to FIG. 3, the battery cell 150 may include an electrode assembly 160, a battery can 170 and a top cap 175. In addition to the above-described components, the battery cell 150 may further include a sealing gasket 180, a current collector plate 185, an insulation plate 190 and a connecting plate 195.

The electrode assembly 160 includes a first electrode plate having a first polarity, a second electrode plate having a second polarity and a separator interposed between the first electrode plate and the second electrode plate. The electrode assembly 160 may have a jelly-roll shape. That is, the electrode assembly 160 may be formed by winding a stack around a winding center C, the stack formed by stacking the first electrode plate, the separator and the second electrode plate at least once in that order. In this case, the separator may be provided on the outer peripheral surface of the electrode assembly 160 for insulation from the battery can 170. The first electrode plate is a positive or negative electrode plate, and the second electrode plate corresponds to an electrode plate having the opposite polarity to the first electrode plate.

The first electrode plate includes a first electrode current collector and a first electrode active material coated on one or two surfaces of the first electrode current collector. A noncoated region in which the first electrode active material is not coated exists at one end of the widthwise direction (parallel to the Z axis) of the first electrode current collector. The noncoated region may act as a first electrode tab 162. The first electrode tab 162 is provided at the upper part of the heightwise direction (parallel to the Z axis) of the electrode assembly 160 accommodated in the battery can 170.

The second electrode plate includes a second electrode current collector and a second electrode active material coated on one or two surfaces of the second electrode current collector. A noncoated region in which the second electrode active material is not coated exists at the other end of the widthwise direction (parallel to the Z axis) of the second electrode current collector. The noncoated region acts as a second electrode tab 164. The second electrode tab 164 is provided at the lower part of the heightwise direction (parallel to the Z axis) of the electrode assembly 160 accommodated in the battery can 170.

The battery can 170 is a cylindrical receiving structure having a top opening, and is made of a metal having conductive properties. The battery can 170 accommodates the electrode assembly 160 together with an electrolyte through the top opening.

The battery can 170 is electrically connected to the second electrode tab 164 of the electrode assembly 160. Accordingly, the battery can 170 has the same polarity as the second electrode tab 164. In this embodiment, the battery can 170 may act as the negative electrode 170.

The battery can 170 includes a beading portion 171 and a crimping portion 172 at the upper end. The beading portion 171 is formed on the electrode assembly 160. The beading portion 171 is formed by press-fitting the periphery of the outer peripheral surface of the battery can 170. The beading portion 171 may prevent the electrode assembly 160 having a size corresponding to the width of the battery can 170 from slipping out of the top opening of the battery can 170, and may act as a support on which the top cap 175 is seated.

A top edge 173 of the beading portion 171 of the battery can 170 may be inserted into or positioned in contact with a guide groove 249 of a negative electrode connection portion 248 of the busbar assembly 200 as described below. This is to make a welding process easier in the welding process for electrical connection between the busbar assembly 200 as described below and the battery can 170 that acts as the negative electrode 170.

The crimping portion 172 is formed on the beading portion 171. The crimping portion 172 is extended and bent to cover the outer peripheral surface of the top cap 175 positioned on the beading portion 171 and part of the upper surface of the top cap 175.

The top cap 175 is a component made of a metal having conductive properties, and covers the top opening of the battery can 170. The top cap 175 is electrically connected to the first electrode tab 162 of the electrode assembly 160, and electrically insulated from the battery can 170. Accordingly, the top cap 175 may act as the positive electrode 175 of the battery cell 150.

The top cap 175 is seated on the beading portion 171 formed in the battery can 170 and is fixed by the crimping portion 172. The sealing gasket 180 may be interposed between the top cap 175 and the crimping portion 172 of the battery can 170 to ensure sealability of the battery can 170 and electrical insulation between the battery can 170 and the top cap 175.

The top cap 175 may have a protruding part that protrudes upwards from the center. The protruding part may guide the contact with an electrical connection component, for example, busbars.

The current collector plate 185 is coupled on the electrode assembly 160. The current collector plate 185 is made of a metal having conductive properties, and is connected to the first electrode tab 162. A lead 187 may be connected to the current collector plate 185, and the lead 187 may be extended upwards from the electrode assembly 160 and directly coupled to the top cap 175 or coupled to the connecting plate 195 coupled to the lower surface of the top cap 175.

The current collector plate 185 is coupled to the end of the first electrode tab 162. The coupling between the first electrode tab 162 and the current collector plate 185 may be performed, for example, by laser welding. The laser welding may be performed by partially melting the base material of the current collector plate 185, and may be performed with solders for welding interposed between the current collector plate 185 and the first electrode tab 162. In this case, the solders may have a lower melting point than the current collector plate 185 and the first electrode tab 162.

The current collector plate 185 may be coupled to the lower surface of the electrode assembly 160. In this case, a surface of the current collector plate 185 may be coupled to the second electrode tab 164 of the electrode assembly 160 by welding, and the opposite surface may be coupled to the inner bottom surface of the battery can 170 by welding. The coupling structure of the current collector plate 185 coupled to the lower surface of the electrode assembly 160 and the second electrode tab 164 is substantially the same as the current collector plate 185 coupled to the upper surface of the electrode assembly 160 described above.

The insulation plate 190 is positioned between the upper end of the electrode assembly 160 and the beading portion 171 or between the current collector plate 185 coupled on the electrode assembly 160 and the beading portion 171 to prevent the contact between the first electrode tab 162 and the battery can 170 or the contact between the current collector plate 185 and the battery can 170.

The insulation plate 190 has a lead hole 193 through which the lead 187 extended upwards from the current collector plate 185 or the first electrode tab 162 may come out. The lead 187 is extended upwards through the lead hole 193 and coupled to the lower surface of the connecting plate 195 or the lower surface of the top cap 175.

As described above, the battery cell 150 according to an embodiment of the present disclosure has a structure in which the top cap 175 provided on the upper side and the top edge 173 of the battery can 170 in the lengthwise direction (parallel to the Z axis in FIG. 2) of the battery can 170 are used as the positive electrode 175 and the negative electrode 170, respectively. Accordingly, in electrically connecting the plurality of battery cells 150 according to an embodiment of the present disclosure, the electrical connection component such as the busbar assembly 200 may be positioned on only one side of the battery cells 150, thereby simplifying the structure and improving the energy density.

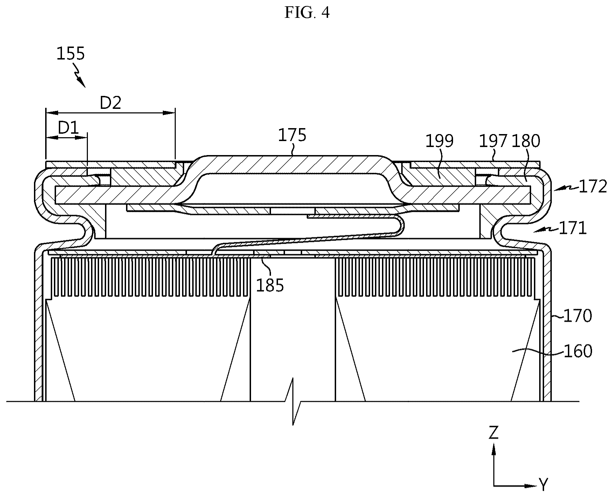

FIG. 4 is a diagram illustrating a battery cell according to another embodiment of the battery cell assembly of FIG. 3.

Since the battery cell 155 according to this embodiment is similar to the battery cell 150 of the previous embodiment, an overlapping description of the substantially identical or similar elements to the previous embodiment is omitted, and hereinafter, a description will be made based on difference(s) between this embodiment and the previous embodiment.

Referring to FIG. 4, in addition to the components of the battery cell 150 described previously, the battery cell 155 may further include a metal washer 197 and an insulation washer 199.

The metal washer 197 is a component that is made of a metal having conductive properties and is approximately in the shape of a disc having a hole at the center. The metal washer 197 is coupled on the crimping portion 172 of the battery can 170. The coupling between the metal washer 197 and the crimping portion 172 may be accomplished, for example, by laser welding.

The metal washer 197 is electrically insulated from the top cap 175. The top cap 175 is exposed through the hole formed at the center of the metal washer 197, and the metal washer 197 is spaced apart from the protruding part formed at the center of the top cap 175. Additionally, the metal washer 197 is vertically spaced apart from the remaining part except the protruding part of the top cap 175. Accordingly, the metal washer 197 is electrically connected to the second electrode tab 164 and the battery can 170 and may act as the negative electrode of the battery cell 155.

A width D2 of the metal washer 197 is larger than a width D1 of the upper surface of the crimping portion 172 of the battery can 170. This is to increase the coupling area between the electrical connection component and the metal washer 197 in coupling the electrical connection component such as the busbar assembly 200 to the metal washer 197 to connect the plurality of battery cells 150. As described above, as the coupling area between the electrical connection component and the metal washer 197 increases, the welding process may be smoothly performed, thereby improving the bonding strength between the two components and reducing the electrical resistance at the coupled part.

The insulation washer 199 is interposed between the top cap 175 and the metal washer 197. The insulation washer 199 is made of a material having insulating properties. In the battery cell 155 according to an embodiment of the present disclosure, since the top cap 175 acts as the positive electrode and the metal washer 197 acts as the negative electrode, the top cap 175 and the metal washer 197 need to maintain the electrical insulation condition. Accordingly, the insulation washer 199 may be preferably applied to stably maintain the insulation condition.

The insulation washer 199 is interposed between the lower surface of the metal washer 197 and the top cap 175. As described above, the metal washer 197 has a larger width D2 than the width D1 of the upper surface of the crimping portion 172, and is extended from the crimping portion 172 to the protruding part at the center of the top cap 175. Accordingly, the insulation washer 199 may be extended to cover the inner surface of the hole formed at the center of the metal washer 197 to prevent the contact between the inner surface of the hole formed at the center of the metal washer 197 and the protruding part of the top cap 175.

When the insulation washer 199 is made of resin, the insulation washer 199 may be coupled to the metal washer 197 and the top cap 175 by heat fusion. In this case, it is possible to enhance sealability at the coupling interface between the insulation washer 199 and the metal washer 197 and the coupling interface between the insulation washer 199 and the top cap 175.

Hereinafter, the busbar assembly 200 for electrical connection to the plurality of battery cells 150 will be described in more detail.

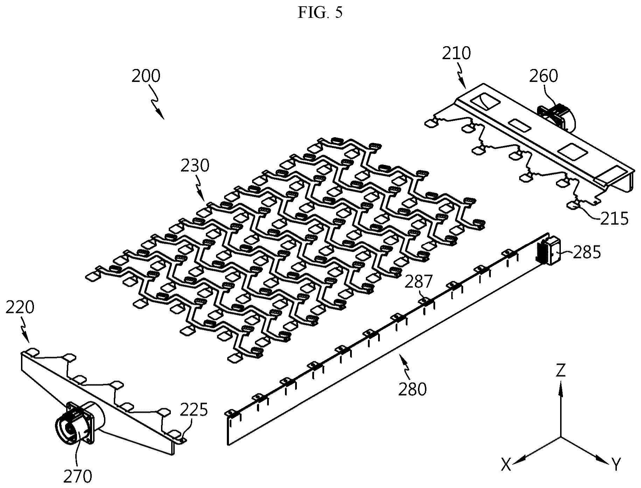

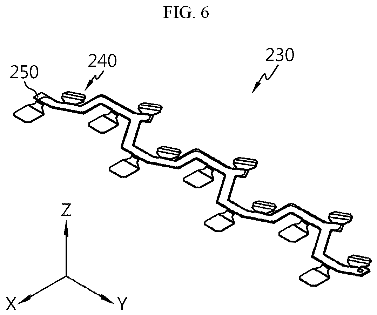

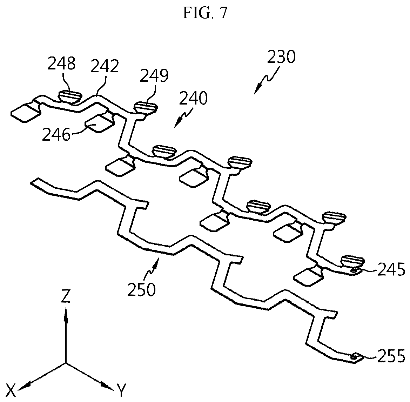

FIG. 5 is an exploded perspective view of the busbar assembly of the battery pack of FIG. 2, FIG. 6 is a perspective view of the connecting busbar of the busbar assembly of FIG. 5, and FIG. 7 is an exploded perspective view of the connecting busbar of FIG. 6.

Referring to FIGS. 5 to 7, the busbar assembly 200 may be provided on the battery cell assembly 100 (+Z axis direction) and electrically connected to the plurality of battery cells 150. The electrical connection of the busbar assembly 200 may be a parallel and/or series connection.

The busbar assembly 200 may be electrically connected to the positive electrode 175 (see FIG. 2) and the negative electrode 170 (see FIG. 2) of the plurality of battery cells 150 (see FIG. 2), and electrically connected to an external charge/discharge line through connectors 260, 270.

Hereinafter, the components of the busbar assembly 200 will be described in more detail.

The busbar assembly 200 may include a pair of main busbars 210, 220, a connecting busbar 230, the pair of connectors 260, 270 and an interconnection board 280.

The pair of main busbars 210, 220 may be electrically connected to the battery cell assembly 100, and may include the connectors 260, 270 connected to the external charge/discharge line.

The pair of main busbars 210, 220 may be electrically connected to the battery cells 150 positioned at two outermost sides among the battery cells 150 of the battery cell assembly 100. Specifically, each of the pair of main busbars 210, 220 may be electrically connected to the battery cells 150 positioned on each outermost side, in the front/rear direction (X axis direction) of the battery cell assembly 100.

The pair of main busbars 210, 220 may include the main positive electrode busbar 210 and the main negative electrode busbar 220.

The main positive electrode busbar 210 may be positioned at the rear side (-X axis direction) of the busbar assembly 200 on the battery cell assembly 100 (+Z axis direction). The main positive electrode busbar 210 may be electrically connected to the positive electrode 175 of the battery cells 150 positioned on the outermost rear side (-Z axis direction) of the battery cell assembly 100. The electrical connection may be established through a welding process for electrical connection such as laser welding or ultrasonic welding.

The main positive electrode busbar 210 may include the positive connector 260 as described below for connection to the charge/discharge line. The positive connector 260 may be provided on the rear side (-X axis direction) of the main positive electrode busbar 210 in a protruding manner.

The main positive electrode busbar 210 may include an interconnection board connection portion 215 for electrical connection to the interconnection board 280 as described below at one end (+Y axis direction). The interconnection board connection portion 215 may be connected to the interconnection board 280 through screw coupling or riveting.

The main negative electrode busbar 220 may be positioned at the front side (+X axis direction) of the busbar assembly 200 on the battery cell assembly 100 (+Z axis direction). The main negative electrode busbar 220 may be electrically connected to the negative electrode 170 of the battery cells 150 positioned on the outermost front side (+X axis direction) of the battery cell assembly 100. The electrical connection may be established through a welding process for electrical connection such as laser welding or ultrasonic welding.

The main negative electrode busbar 220 may include the negative connector 270 as described below for connection to the charge/discharge line. The negative connector 270 may be provided on the front side (+X axis direction) of the main negative electrode busbar 220 in a protruding manner.

The main negative electrode busbar 220 may include an interconnection board connection portion 225 for electrical connection to the interconnection board 280 as described below at one end (+Y axis direction). The interconnection board connection portion 225 may be connected to the interconnection board 280 through screw coupling or riveting.

The connecting busbar 230 is used to electrically connect the plurality of battery cells 150, and a plurality of connecting busbars 230 may be provided. The plurality of connecting busbars 230 may be electrically connected to the pair of main busbars 210, 220, and connected to the positive electrode 175 and the negative electrode 170 of the plurality of battery cells 150.

The plurality of connecting busbars 230 may be spaced a predetermined distance apart from each other along the lengthwise direction (Y axis direction) of the battery cell assembly 100. Furthermore, the plurality of connecting busbars 230 may be positioned between the main positive electrode busbar 210 and the main negative electrode busbar 220 in the front/rear direction (X axis direction) of the busbar assembly 200.

Each of the plurality of connecting busbars 230 may include a busbar layer 240 and a support layer 250.

The busbar layer 240 may be formed over a predetermined length along the widthwise direction (Y axis direction) of the battery cell assembly 100 and electrically connected to the positive electrode 175 and the negative electrode 170 of the battery cells 150.

The busbar layer 240 may include a layer body 242, an interconnection board connection portion 245 and electrode connection portions 246, 248.

The layer body 242 may be formed over a predetermined length along the widthwise direction (X axis direction) of the battery cell assembly 100. The layer body 242 may be provided in a shape corresponding to the arrangement structure of the battery cells 150 in the widthwise direction of the battery cell assembly 100 for electrical connection to the battery cells 150.

The layer body 242 may be made of a conductive material. For example, the layer body 242 may be made of a metal, for example, aluminum or copper. The layer body 242 is not limited thereto and may be made of any other material for the electrical connection.

The interconnection board connection portion 245 may be provided at one end (+Y axis direction) of the layer body 242 and electrically connected to the interconnection board 280 as described below. The interconnection board connection portion 245 may be connected to the interconnection board 280 through screw coupling or riveting.

The electrode connection portions 246, 248 may protrude from the layer body 242 and may be connected to the positive electrode 175 and the negative electrode 170 of the battery cells 150. Specifically, the electrode connection portions 246, 248 may include the positive electrode connection portion 246 and the negative electrode connection portion 248.

A plurality of positive electrode connection portions 246 may be provided, and they may protrude to a predetermined size on the front side (+X axis direction) of the layer body 242, and may be spaced a predetermined distance apart from each other along the lengthwise direction (Y axis direction) of the layer body 242.

The plurality of positive electrode connection portions 246 may be electrically connected to the positive electrode 175 of the battery cells 150 of the battery cell assembly 100 positioned below the busbar assembly 200 (-Z axis direction). The electrical connection may be established through a welding process for electrical connection such as laser welding or ultrasonic welding.

A plurality of negative electrode connection portions 248 may be provided, and they may protrude to a predetermined size on the rear side (-X axis direction) of the layer body 242, and may be spaced a predetermined distance apart from each other along the lengthwise direction (X axis direction) of the layer body 242. The plurality of negative electrode connection portions 248 may be arranged with the plurality of positive electrode connection portions 246 in a zigzag pattern in the lengthwise direction (Y axis direction) of the layer body 242.

The plurality of negative electrode connection portions 248 may be electrically connected to the negative electrode 170 of the battery cells 150 of the battery cell assembly 100 positioned below the busbar assembly 200 (-Z axis direction). The electrical connection may be established through a welding process for electrical connection such as laser welding or ultrasonic welding.

Each of the plurality of negative electrode connection portions 248 may have the guide groove 249. The guide groove 249 may be provided in a groove shape corresponding to an arc shape of the top edge 173 of the battery can 170 (see FIG. 3) that forms the negative electrode of the battery cells 150. The guide groove 249 may be inserted into or placed in close contact with the top edge 173 of the battery cells 150 in the welding process for electrical connection to the negative electrode 170 of the battery cells 150, thereby making the welding process easier and improving accuracy of the welding process.

The support layer 250 may be provided on bottom (-Z axis direction) of the busbar layer 240 to support the busbar layer 240. The support layer 250 may have a shape corresponding to the layer body 250, and may be fixed in contact with the bottom (-Z axis direction) of the layer body 250.

The support layer 250 may be made of an insulating material to prevent an electrical short between the plurality of battery cells 150 and the busbar layer 240. For example, the support layer 250 may include a polyimide film. The support layer 250 is not limited thereto, and may include any other insulation member made of an insulating material.

The support layer 250 may include an interconnection board connection portion 255 at one end (+Y axis direction). The interconnection board connection portion 255 may be provided at a location corresponding to the interconnection board connection portion 245 of the layer body 242 and electrically connected to the interconnection board 280 as described below. The interconnection board connection portion 255 may be connected to the interconnection board 280 through screw coupling or riveting.

The pair of connectors 260, 270 is used to connect to the external charge/discharge line, and may include the positive connector 260 and the negative connector 270. The positive connector 260 may be provided on the rear side (-X axis direction) of the main positive electrode busbar 210 in a protruding manner, and the negative connector 270 may be provided on the front side (+Z axis direction) of the main negative electrode busbar 220 in a protruding manner.

The interconnection board 280 is used to sense the voltage of the battery cells 150 of the battery cell assembly 100, and may be formed over a predetermined length in the lengthwise direction (X axis direction) of the busbar assembly 200.

Specifically, the interconnection board 280 may measure the voltage of the battery cells 150 connected in parallel among the battery cells 150 of the battery cell assembly 100, and through this, the state of charge of the battery cell assembly 100 may be determined.

To this end, the interconnection board 280 may be electrically connected to an external sensing line and electrically connected to the main positive electrode busbar 210, the main negative electrode busbar 220 and the plurality of connecting busbars 230.

The interconnection board 280 may include a sensing connector 285 and a busbar connection portion 287.

The sensing connector 285 may be connected to the external sensing line, and may be provided at one end (-X axis direction) of the interconnection board 280. The sensing connector 285 may be exposed from the battery pack 10 for connection to the external sensing line. The external sensing line may connect the sensing connector 285 to a battery management system (not shown). The battery management system may determine the state of charge of the battery cells connected in parallel based on the voltage of the battery cells connected in parallel.

A plurality of busbar connection portions 287 may be provided, and may be spaced a predetermined distance apart from each other along the lengthwise direction (X axis direction) of the interconnection board 280. The plurality of busbar connection portions 287 may be connected to the interconnection board connection portion 215 of the main positive electrode busbar 210, the interconnection board connection portion 225 of the main negative electrode busbar 220 and the interconnection board connection portions 245, 255 of the plurality of connecting busbars 230 by bolting or riveting.

Hereinafter, the connecting busbar 230A according to another embodiment of the busbar assembly 200 of the present disclosure will be described.

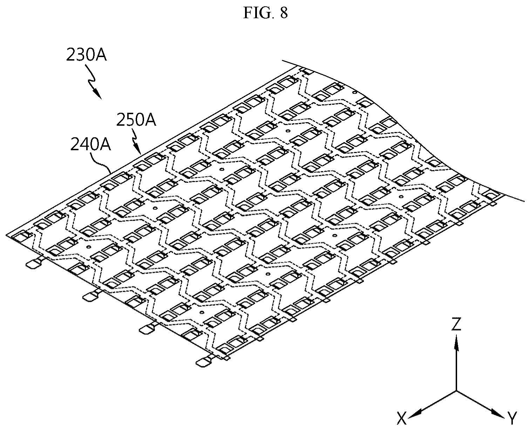

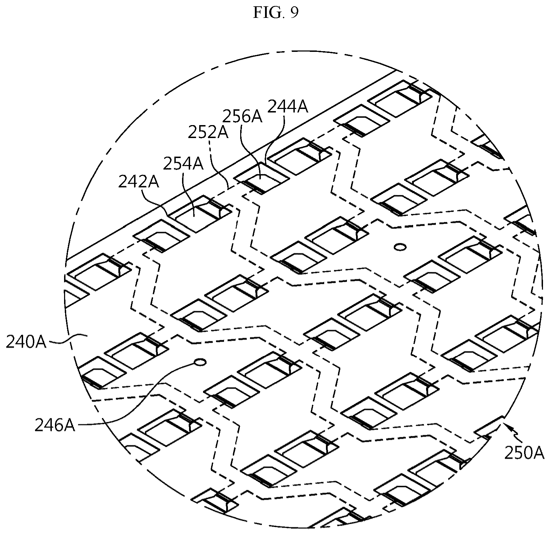

FIG. 8 is a perspective view of the connecting busbar according to another embodiment of the busbar assembly of FIG. 5, and FIG. 9 is a diagram illustrating the main parts of the connecting busbar of FIG. 8.

Referring to FIGS. 8 and 9, the connecting busbar 230A may include a busbar cover 240A and a sub busbar 250A.

The busbar cover 240A may cover the top of the battery cell assembly 100, and may be provided in an approximately flat plate shape. The shape and size of the busbar cover 240A may change depending on the required number or capacity of the battery cells 150 in the battery pack 10.

The busbar cover 240A may be made of an insulating material. For example, the busbar cover 240A may include a polyimide film. The busbar cover 240A is not limited thereto, and may include any other insulating member made of an insulating material.

A pair of busbar cover 240A may be provided with a shape and size corresponding to each other in the up/down direction (Z axis direction) of the battery pack 10, and connected to each other. Here, the sub busbar 250A as described below may be a single layer and may be inserted between the pair of busbar covers 240A.

The busbar cover 240A may include a positive electrode busbar hole 242A, a negative electrode busbar hole 244A and a fastening hole 246A.

The positive electrode busbar hole 242A may have an opening space of a predetermined size, and a plurality of positive electrode busbar holes 242A may be provided. The positive electrode busbar hole 242A may expose the positive electrode connection portion 254A as described below. Here, the positive electrode busbar hole 242A may have the opening space that is larger than the size of the positive electrode connection portion 254A as described below to improve workability and injection efficiency of the thermally conductive member 400 as described below.

The positive electrode busbar hole 242A may guide the electrical connection between the positive electrode connection portion 254A as described below and the first electrode terminal 175 (see FIG. 3) which is the positive electrode of the battery cells 150 more efficiently.

Furthermore, it is possible to significantly increase the injection efficiency of the thermally conductive member 400 when injecting the thermally conductive member 400 as described below through the opening space of the positive electrode busbar hole 242A. Specifically, the thermally conductive member 400 including a potting resin 400 as described below may be injected in the vertical direction (Z axis direction) downwards from the battery pack 10 more directly through the opening space of the positive electrode busbar hole 242A, thereby significantly improving the injection efficiency between the battery cells 150.

The negative electrode busbar hole 244A may be positioned facing the positive electrode busbar hole 242A, and in the same way as the positive electrode busbar hole 242A, may have an opening space of a predetermined size and a plurality of negative electrode busbar holes 244A may be provided. Here, the negative electrode busbar hole 244A may have the opening space that is larger than the size of the negative electrode connection portion 256A as described below to improve workability and injection efficiency of the thermally conductive member 400 as described below.

The negative electrode busbar hole 244A may guide the electrical connection between the negative electrode connection portion 256A as described below and the battery can 170 (see FIG. 3) which is the negative electrode of the battery cells 150 more efficiently.

Furthermore, it is possible to significantly increase the injection efficiency of the thermally conductive member 400 when injecting the thermally conductive member 400 as described below through the opening space of the negative electrode busbar hole 244A. Specifically, the thermally conductive member 400 including the potting resin 400 as described below may be injected in the vertical direction (Z axis direction) downwards from the battery pack 10 more directly through the opening space of the negative electrode busbar hole 244A, thereby significantly improving the injection efficiency between the battery cells.

A plurality of fastening holes 246A may be provided and used to fix the connecting busbar 230A more stably, and a fastening member such as a bolting member may be fastened.

The sub busbar 250A is used for electrical connection to the positive electrode 175 and the negative electrode 170 of the plurality of battery cells 150, and may be provided on the busbar cover 240A or inserted into the pair of busbar covers 240A. Hereinafter, this embodiment will be described based on the sub busbar 250A inserted into the busbar covers 240A.

The sub busbar 250A may include a busbar bridge 252A, the positive electrode connection portion 254A and the negative electrode connection portion 256A.

The busbar bridge 252A may be inserted into the busbar covers 240A, and may be formed over a predetermined length along the widthwise direction (Y axis direction) of the battery pack 10. The busbar bridge 252A may be provided in a shape corresponding to the arrangement structure of the battery cells 150 in the widthwise direction (Y axis direction) of the battery pack 10 to increase the electrical connection efficiency with the battery cells 150. Accordingly, in this embodiment, the busbar bridge 252A may be positioned in a zigzag pattern in the widthwise direction (Y axis direction) of the battery pack 10.

A plurality of busbar bridges 252A may be provided. The plurality of busbar bridges 252A may be inserted into the busbar covers 240A and may be spaced a predetermined distance apart from each other along the lengthwise direction (X axis direction) of the battery pack 10.

The busbar bridge 252A may be made of a conductive material. The busbar bridge 252A may be made of a metal, for example, aluminum or copper. The busbar bridge 252A is not limited thereto and may be made of any other material for the electrical connection.

The positive electrode connection portion 254A may integrally extend and protrude from the busbar bridge 252A, and may be positioned in the positive electrode busbar hole 242A. The positive electrode connection portion 254A may be electrically connected to the positive electrode 175 (see FIG. 3) of the battery cells 150. The electrical connection may be established through a welding process for electrical connection such as laser welding or ultrasonic welding.

As the connection between the positive electrode connection portion 254A and the positive electrode 175 of the battery cells 150 is established in the opening space of the positive electrode busbar hole 242A, when establishing the connection, the welding process for the connection may be immediately performed in the opening space without any additional process.

The negative electrode connection portion 256A may integrally extend from the busbar bridge 252A and protrude in a direction opposite to the positive electrode connection portion 254A, and may be positioned in the negative electrode busbar hole 244A. The negative electrode connection portion 256A may be electrically connected to the negative electrode 170 (see FIG. 3) of the battery cells 150. The electrical connection may be established through a welding process for electrical connection such as laser welding or ultrasonic welding.

As the connection between the negative electrode connection portion 256A and the negative electrode 170 of the battery cells 150 may be established in the opening space of the negative electrode busbar hole 244A, when establishing the connection, the welding process for the connection may be immediately performed in the opening space without any additional process.

Referring back to FIG. 2, the heat sink 300 may be spaced a predetermined distance apart from the busbar assembly 200, and may support the bottom (-Z axis direction) of the plurality of battery cells 150. The heat sink 300 may be provided below the battery cell assembly 100 (-Z axis direction) and positioned at the lower part (-Z axis direction) of the battery pack 10.

Hereinafter, the heat sink 300 will be described in more detail.

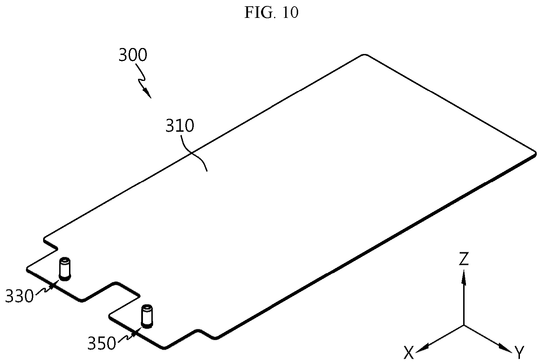

FIG. 10 is a perspective view of the heat sink of the battery pack of FIG. 2.

Referring to FIG. 10 together with FIG. 2, the heat sink 300 may include a sink body 310, a cooling water inlet port 330 and a cooling water outlet port 350.

The sink body 310 may support the bottom (-Z axis direction) of the plurality of battery cells 150. The sink body 310 may have a cooling channel in which a cooling water flows.

The sink body 310 may be fixed in contact with the bottom (-Z axis direction) of the plurality of battery cells 150 through the thermally conductive member 400 made of resin. The sink body 310 is not limited thereto and may be fixed in contact with the bottom of the battery cells 150 through any fixing resin or an adhesive.

In this embodiment, the electrode structure and the electrical connection structure of the positive electrode 175 and the negative electrode 170 is only formed on the top (+Z axis direction) of the battery cells 150, and thus the bottom (-Z axis direction) of the battery cells 150 may come into surface contact with the sink body 310 to maximize the contact area.

Accordingly, in this embodiment, it is possible to increase the cooling performance of the battery cells 150 through the fixing structure in surface contact between the bottom (-Z axis direction) of the battery cells 150 and the sink body 310.

The cooling water inlet port 330 may communicate with the cooling channel of the sink body 310, and may be provided in the sink body 310. Specifically, the cooling water inlet port 330 may be provided on the front side (-X axis direction) of the sink body 310, and may be exposed from the battery pack 10 for connection to an external cooling line.

The cooling water outlet port 350 may be provided in the sink body 310, spaced a predetermined distance apart from the cooling water inlet port 330. Specifically, the cooling water outlet port 350 may be provided on the front side (-X axis direction) of the sink body 310, and may be exposed from the battery pack 10 for connection to the external cooling line.

Referring back to FIG. 2, the thermally conductive member 400 may be filled in a space between the plurality of battery cells 150 on the heat sink 300 (+Z axis direction). Meanwhile, in FIG. 2, the thermally conductive member 400 is indicated by a rectangular prism in a dashed line for convenience of understanding, and the thermally conductive member 400 may be fully filled in the space between the plurality of battery cells 150 on the heat sink 300.

The thermally conductive member 400 may fix the plurality of battery cells 150 more stably and increase the heat transfer efficiency of the plurality of battery cells 150, thereby further increasing the cooling performance of the battery cells 150.

The thermally conductive member 400 may include a potting resin. The potting resin may be formed by injecting a thin resin material into the plurality of battery cells 150 and curing it. Here, the injection of the resin material may be performed at room temperature of about 15°C to 25°C to prevent thermal damage of the plurality of battery cells 150.

Specifically, the thermally conductive member 400 may include a silicone resin. The thermally conductive member 400 is not limited thereto, and may include any resin material other than the silicone resin, capable of fixing the battery cells 150 and improving the heat transfer efficiency of the battery cells 150.

In addition to the battery cells 150, the thermally conductive member 400 may be also filled in the busbar assembly 200. Specifically, the battery cells 150 may be filled in the busbar assembly 200 to cover at least part of the busbar assembly 200.

Here, the thermally conductive member 400 may be continuously filled in between the busbar assembly 200 and the battery cells 150 in the up/down direction (Z axis direction) of the battery cell assembly 100 without discontinuity or a gap between the busbar assembly 200 and the battery cells 150.

As described above, since the thermally conductive member 400 according to this embodiment is continuously filled in the battery cells 150 and the busbar assembly 200 without discontinuity, it is possible to achieve uniform heat distribution in the area between the battery cells 150 and the busbar assembly 200 without non-uniform heat distribution, thereby significantly increasing the cooling performance of the battery pack 10.

Referring back to FIG. 2, the battery pack 10 may further include a bottom frame 500.

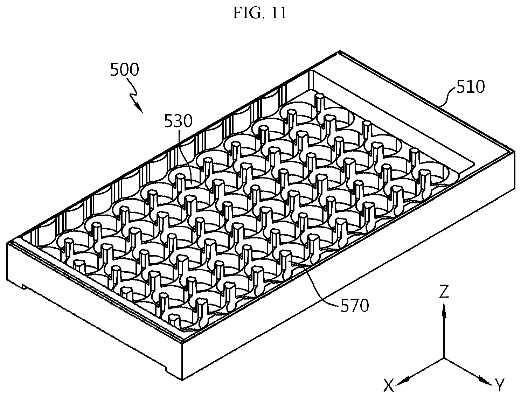

FIG. 11 is a perspective view of the bottom frame of the battery pack of FIG. 2.

Referring to FIG. 11 together with FIG. 2, the bottom frame 500 may support the battery cells 150 of the battery cell assembly 100 on the heat sink 500 (+Z axis direction).

The bottom frame 500 may include a bottom housing 510, a cell insertion portion 530 and a cell guide rib 570.

The bottom housing 510 may be positioned on the heat sink (+Z axis direction) and accommodate the plurality of battery cells 150 at least in part. The bottom housing 510 may ensure the strength of the battery pack 10 and fix and support the battery cells 150 more stably.

The cell insertion portion 530 may be provided on bottom of the bottom housing 510 (-Z axis direction), and a plurality of cell insertion portions 530 may be provided. The bottom (-Z axis direction) of the plurality of battery cells 150 may be inserted into the plurality of cell insertion portions 530.

The plurality of cell insertion portions 530 may be formed in a shape corresponding to the bottom (-Z axis direction) of the plurality of battery cells 150, and may have an open shape in the up/down direction (Z axis direction) such that the bottom (-Z axis direction) of the plurality of battery cells 150 comes into contact with the heat sink 300.

The cell guide rib 570 is used to fix the plurality of battery cells 150 more stably, and may be provided between the plurality of cell insertion portions 530. A plurality of cell guide ribs 570 may be provided and protrude to a predetermined height (+Z axis direction) from the lower surface (-Z axis direction) of the bottom housing 510.

Hereinafter, the pack case structure formation through the thermally conductive member 400 of the battery pack 10 according to this embodiment will be described in more detail. The process of injecting the thermally conductive member 400 for forming the pack case structure may be performed after the assembly between the battery cell assembly 100, the busbar assembly 200, the heat sink 300 and the bottom frame 500 of the battery pack 10 as described above.

Hereinafter, the bottom frame 505 according to another embodiment of the battery pack 10 of the present disclosure will be described.

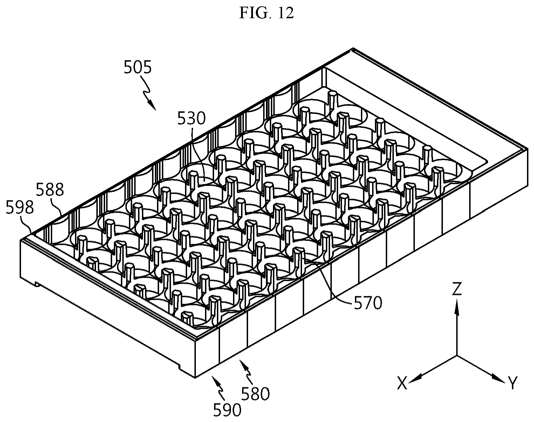

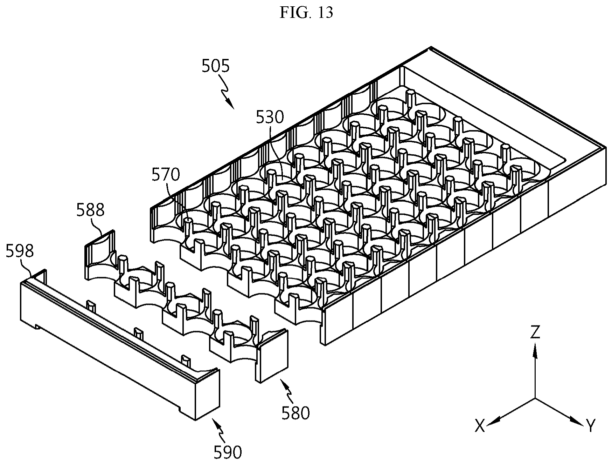

FIGS. 12 and 13 are diagrams illustrating the bottom frame according to another embodiment of the battery pack of FIG. 2.

Referring to FIGS. 12 and 13, the bottom frame 505 may include a main plate 580 and an end plate 590.

The main plate 580 may be formed over a predetermined length along the widthwise direction (Y axis direction) of the battery pack 10, and accommodate the battery cells 150 arranged in two lines in the lengthwise direction (X axis direction) of the battery pack 10. A plurality of main plates 580 may be provided, and may be spaced a predetermined distance apart from each other along the lengthwise direction (X axis direction) of the battery pack 10.

When coupled to each other, the plurality of main plates 580 may include the cell insertion portions 530 for insertion of the battery cells 150 and the cell guide ribs 570 to guide the stable fixing of the battery cells 150.

Additionally, the plurality of main plates 580 may not only ensure the strength of the battery cells 150 but also reduce the injection volume of the thermally conductive member 400 as described below since the plurality of main plates 580 occupies a predetermined space in the battery pack 10 (see FIG. 2). As the thermally conductive member 400 including silicone resin as described below has a relatively high cost, it is possible to improve the price competitiveness when fabricating the battery pack 10 by reducing the injection volume of the silicone resin through the plurality of main plates 580.

The plurality of main plates 580 may include a guide step 588.

The guide step 588 may protrude to a predetermined height at two upper ends of the widthwise direction (Y axis direction) of the main plate 580. When the assembly of the bottom frame 505 by the coupling between the main plates 580 and the end plate 590 as described below is completed, the guide step 588 may form the edge of the bottom frame 505 together with an end guide step 598 of the end plate 590 as described below.

A pair of end plates 590 may be provided and positioned on two outermost sides along the lengthwise direction (X axis direction) of the bottom frame 505. The pair of end plates 590 may accommodate and support the battery cells 150 together with the main plate 580 positioned on the opposite side.

The pair of end plates 590 may include the end guide step 598.

The end guide step 598 may be formed along the top edge of the end plate 590, and provided in a protruding manner to the same height as the guide step 588. When the assembly of the bottom frame 505 is completed, the end guide step 598 may form the edge of the bottom frame 505 together with the guide step 588 of the main plates 580.

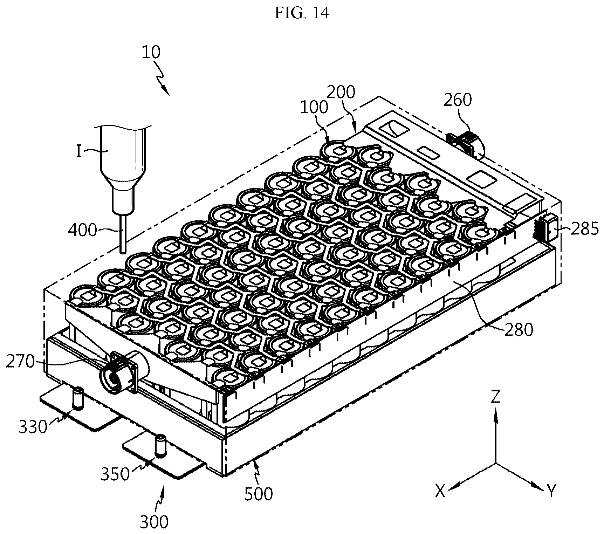

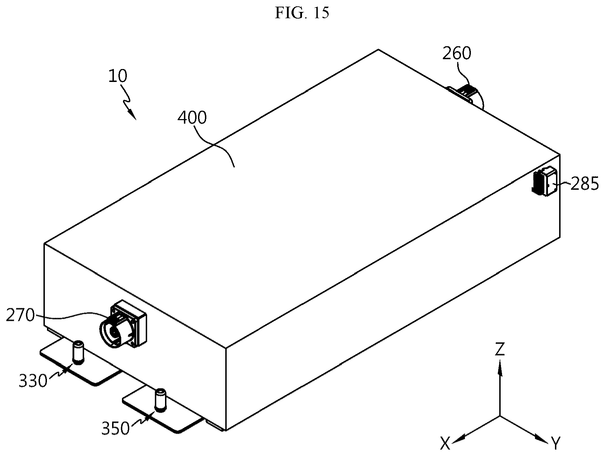

FIGS. 14 and 15 are diagrams illustrating the pack case structure formation through the thermally conductive member of the battery pack of FIG. 1.

Referring to FIGS. 14 and 15, when fabricating the battery pack 10, after assembling the battery cell assembly 100, the busbar assembly 200 and the heat sink 300 together, the manufacturer may form the pack case of the battery pack 10 through the thermally conductive member 400 made of the resin material by injecting and applying the thermally conductive member 400 through a resin injector 1.

In this instance, to inject and apply the thermally conductive member 400 more smoothly, after assembled together, the battery cell assembly 100, the busbar assembly 200 and the heat sink 300 may be temporarily mounted in a mold (not shown) for guiding the injection of the thermally conductive member 400. Here, the mold may have a corresponding shape to the shape of the pack case, and may expose the component connected to an external device, such as the positive electrode connector 260, the negative electrode connector 270, the sensing connector 285, the cooling water inlet port 330 and the cooling water outlet port 340.

When the thermally conductive member 400 is cured in the mold, the thermally conductive member 400 may form the pack case of the battery pack 10, and subsequently, the manufacturer may remove the mold.

Accordingly, in this embodiment, since the pack case is formed through the thermally conductive member 400 made of the potting resin, compared to the conventional pack case formed as a complex assembly of a plurality of plates, it is possible to simplify the assembly process of the battery pack 10 and significantly reduce the fabrication cost, thereby improving price competitiveness.

Furthermore, compared to the conventional cell frame structure including an assembly of a plurality of plates, in this embodiment, it is possible to reduce the total size of the battery pack 10 through the pack case structure formed by the thermally conductive member 400, thereby significantly increasing the energy density.

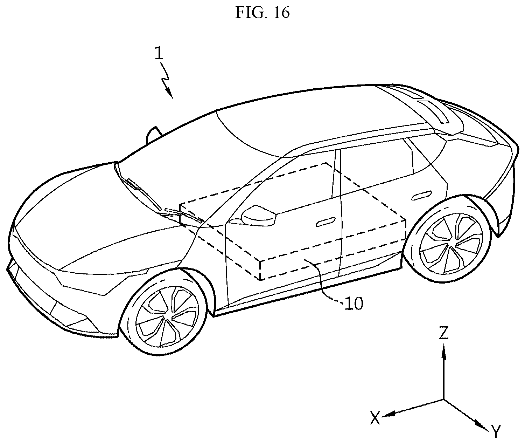

FIG. 16 is a diagram illustrating a vehicle according to an embodiment of the present disclosure.

Referring to FIG. 16, the vehicle 1 may be an electric vehicle or a hybrid electric vehicle, and may include at least one battery pack 10 of the previous embodiment as an energy source.

In this embodiment, since the above-described battery pack 10 is provided with a compact structure having high energy density, it is easy to achieve a modularized structure of a plurality of battery packs 10 when mounting in the vehicle 1, and it is possible to ensure a relatively high degree of freedom in mounting in various inner space shapes of the vehicle 1.

According to the various embodiments as described above, it is possible to provide the battery pack 10 with increased energy density and strength and the vehicle 1 comprising the same.

Additionally, according to the various embodiments as described above, it is possible to provide the battery pack 10 with improved price competitiveness and fabrication efficiency and the vehicle 1 comprising the same.

Furthermore, according to the various embodiments as described above, it is possible to provide the battery pack 10 with improved cooling performance and the vehicle 1 comprising the same.

While the preferred embodiment of the present disclosure has been hereinabove shown and described, the present disclosure is not limited to the above-described particular embodiment, and it is obvious to those skilled in the art that a variety of modifications may be made thereto without departing from the essence of the present disclosure claimed in the appended claims, and such modifications should not be individually understood from the technical aspect or scope of the present disclosure.
In the light of the above, the present invention can be implemented according to the following itemized examples.

ITEM 1. A battery pack, comprising:
a battery cell assembly including a plurality of battery cells;
a busbar assembly which is provided on the battery cell assembly and electrically connected to the plurality of battery cells;
a heat sink which is spaced a predetermined distance apart from the busbar assembly and supports a bottom of plurality of battery cells; and
a thermally conductive member filled in a space between the plurality of battery cells on the heat sink.

ITEM 2. The battery pack according to ITEM 1, wherein the thermally conductive member is filled in the busbar assembly to cover the busbar assembly at least in part.

ITEM 3. The battery pack according to ITEM 1, wherein the thermally conductive member is continuously filled between the busbar assembly and the battery cells in an up/down direction of the battery cell assembly.

ITEM 4. The battery pack according to ITEM 1, wherein the thermally conductive member includes a potting resin.

ITEM 5. The battery pack according to ITEM 4, wherein the potting resin includes a silicone resin.

ITEM 6. The battery pack according to ITEM 1, wherein the heat sink includes:
a sink body which supports the bottom of the plurality of battery cells, and has a cooling channel in which a cooling water flows;
a cooling water inlet port which communicates with the cooling channel of the sink body and is provided in the sink body; and
a cooling water outlet port which is provided in the sink body, spaced a predetermined distance apart from the cooling water inlet port.

ITEM 7. The battery pack according to ITEM 1, wherein the busbar assembly includes:
a pair of main busbars which is electrically connected to the battery cell assembly, and has a connector connected to an external charge/discharge line; and
a plurality of connecting busbars which is electrically connected to the pair of main busbars, and connected to positive and negative electrodes of the plurality of battery cells.

ITEM 8. The battery pack according to ITEM 7, wherein the pair of main busbars is electrically connected to the battery cells positioned on two outermost sides among the battery cells of the battery cell assembly.

ITEM 9. The battery pack according to ITEM 7, wherein the plurality of connecting busbars is spaced a predetermined distance apart from each other along a lengthwise direction of the battery cell assembly.

ITEM 10. The battery pack according to ITEM 7, wherein the plurality of connecting busbars includes:
a busbar layer which is formed over a predetermined length along a widthwise direction of the battery cell assembly, and electrically connected to positive and negative electrodes of the battery cells; and
a support layer which is provided below the busbar layer to support the busbar layer.

ITEM 11. The battery pack according to ITEM 10, wherein the busbar layer includes:
a layer body which is formed over a predetermined length along the widthwise direction of the battery cell assembly; and
a plurality of electrode connection portions which protrudes from the layer body and is connected to the positive and negative electrodes of the battery cells.

ITEM 12. The battery pack according to ITEM 11, wherein the support layer is provided below the layer body, and has a shape corresponding to the layer body.

ITEM 13. The battery pack according to ITEM 12, wherein the support layer is made of an insulating material.

ITEM 14. The battery pack according to ITEM 13, wherein the support layer includes a polyimide film.

ITEM 15. A vehicle comprising at least one battery pack according to ITEM 1.

## Claims

1. A battery pack, comprising:
a battery cell assembly including a plurality of battery cells;
a busbar assembly which is provided on the battery cell assembly and electrically connected to the plurality of battery cells;
a heat sink which is spaced a predetermined distance apart from the busbar assembly and supports a bottom of plurality of battery cells; and
a thermally conductive member filled in a space between the plurality of battery cells on the heat sink,
wherein positive and negative electrodes of the plurality of battery cells are positioned in a same direction.

2. The battery pack according to claim 1, wherein the thermally conductive member is filled in the busbar assembly to cover the busbar assembly at least in part.

3. The battery pack according to claim 1 or 2, wherein the thermally conductive member is continuously filled between the busbar assembly and the battery cells in an up/down direction of the battery cell assembly.

4. The battery pack according to any one of the preceding claims, wherein the thermally conductive member includes a potting resin.

5. The battery pack according to claim 4, wherein the potting resin includes a silicone resin.

6. The battery pack according to any one of the preceding claims, wherein the heat sink includes:
a sink body which supports the bottom of the plurality of battery cells, and has a cooling channel in which a cooling water flows;
a cooling water inlet port which communicates with the cooling channel of the sink body and is provided in the sink body; and
a cooling water outlet port which is provided in the sink body, spaced a predetermined distance apart from the cooling water inlet port.

7. The battery pack according to any one of the preceding claims, wherein the busbar assembly includes:
a pair of main busbars which is electrically connected to the battery cell assembly, and has a connector connected to an external charge/discharge line; and
a plurality of connecting busbars which is electrically connected to the pair of main busbars, and connected to the positive and negative electrodes of the plurality of battery cells.

8. The battery pack according to claim 7, wherein the pair of main busbars is electrically connected to the battery cells positioned on two outermost sides among the battery cells of the battery cell assembly.

9. The battery pack according to claim 7 or 8, wherein the plurality of connecting busbars is spaced a predetermined distance apart from each other along a lengthwise direction of the battery cell assembly.

10. The battery pack according to any one of claims 7 to 9, wherein the plurality of connecting busbars includes:
a busbar layer which is formed over a predetermined length along a widthwise direction of the battery cell assembly, and electrically connected to positive and negative electrodes of the battery cells; and
a support layer which is provided below the busbar layer to support the busbar layer.

11. The battery pack according to claim 10, wherein the busbar layer includes:
a layer body which is formed over a predetermined length along the widthwise direction of the battery cell assembly; and
a plurality of electrode connection portions which protrudes from the layer body and is connected to the positive and negative electrodes of the battery cells.

12. The battery pack according to claim 11, wherein the support layer is provided below the layer body, and has a shape corresponding to the layer body.

13. The battery pack according to claim 12, wherein the support layer is made of an insulating material.

14. The battery pack according to claim 13, wherein the support layer includes a polyimide film.

15. A vehicle comprising at least one battery pack according to any one of claims 1 to 14.
